# EUROPEAN PATENT SPECIFICATION

(11) **EP 2 431 579 B1**
(45) Date of publication and mention of the grant of the patent: **12.10.2016**
(21) Application number: 11178318.9
(22) Date of filing: 22.08.2011
(51) Int. Cl.: F01K 23/06, F01K 23/10, F22B 1/00

(54) **Multipurpose thermal power plant system**
Mehrzweck-Wärmekraftanlagensystem
Système de centrale thermique multifonctions

(30) Priority: 21.09.2010 JP 2010210356
(43) Date of publication of application: 21.03.2012
(73) Proprietor: Mitsubishi Hitachi Power Systems, Ltd., Yokohama 220-8401 (JP)
(72) Inventor: Mishima, Nobuyoshi, Tokyo, 100-8220 (JP); Sugiura, Takashi, Tokyo, 100-8220 (JP)
(74) Representative: MERH-IP Matias Erny Reichl Hoffmann Patentanwälte PartG mbB

(56) References cited:
- US-A1- 2006 144 043
- US-A1- 2007 243 119
- US-A1- 2009 158 978
- US-A1- 2009 272 300
- US-A1- 2010 101 462

## Description

### BACKGROUND OF THE INVENTION

### (Field of the Invention)

The present invention relates to a multipurpose thermal power plant system and more particularly to a fossil fuel combustion multipurpose thermal power plant system having a function for simultaneously performing the three great functions of water desalination, carbon dioxide capture, and power generation, or simultaneously performing the power generation function and water desalination function or carbon dioxide capture function.

### (Description of Related Art)

A thermal power plant having the water desalination function for bleeding steam from the steam turbine cycle for generating power, thereby producing fresh water from seawater is already put into practical use. Furthermore, a coal fuel combustion thermal power plant system simultaneously including not only the power generation function and water desalination function but also a function for compressing and cooling carbon dioxide included in the boiler exhaust gas of an oxygen combustion boiler, thereby capturing carbon dioxide is devised. For example, in Japanese Patent Laid-open No. 2010-101587 (Patent document 1), in a thermal power plant system including an oxygen combustion boiler, an oxygen separator, a coal feed apparatus, a steam turbine, and a steam turbine generator for utilizing that the main components of the exhaust gas of the oxygen combustion boiler are carbon dioxide and steam, using denitrification equipment, an oxygen preheater, a dust collector, a desulfurizer, cooling and dehumidification equipment, and a carbon dioxide liquefier, the constitution of a coal combustion and oxygen combustion boiler for cooling exhaust gas, removing moisture in the exhaust gas, and then capturing carbon dioxide and the control method for the oxygen combustion boiler are disclosed.

In Patent document 2, a method of controlling a process of generating power in a power plant with a boiler by combusting carbonaceous fuel with substantially pure oxygen is described. At full load conditions, the method includes introducing a first carbonaceous fuel feed stream into a furnace, introducing a first substantially pure oxygen feed stream into the furnace for combusting the first carbonaceous fuel feed stream with the oxygen, and recirculating a portion of the exhaust gas discharged from the furnace at a first recirculation flow rate to the furnace, to form, together with the first substantially pure oxygen feed stream, a first inlet gas stream having a predetermined average oxygen content, thereby discharging exhaust gas from the furnace at a first discharge flow rate.

In Patent document 3, a heat recovery equipment includes a power generation plant that drives a steam turbine by superheated steam produced in a boiler, and an exhaust-gas treatment line that treats flue gas output from the boiler. The exhaust-gas treatment line includes a first air preheater, a heat extractor unit, and a dry electrostatic precipitator. The power generation plant includes a condensed water line. The condensed water line includes a condenser, a condensed water heater, and a low-pressure feedwater heater. The condensed water heater heats water condensed by the condenser with the heat recovered by the heat extractor unit.
Patent document 1: Japanese Patent Laid-open No. 2010-101587
Patent document 2: US 2009/158978 A1
Patent document 3: US 2006/144043 A1

### SUMMARY OF THE INVENTION

In Patent document 1, moisture generated by the cooling and dehumidification equipment is discharged outside the system. Regarding it, it is inferred that the quantity of moisture generated by the cooling and dehumidification equipment is not sufficient for effective use.

The main components of the exhaust gas from the oxygen combustion boiler are carbon dioxide gas and steam. Namely, when inputting oxygen gas in the air into the boiler as an oxygen source for boiler fuel, unlike a conventional air combustion boiler forced to input a large amount of unnecessary nitrogen gas in the air which does not contribute to combustion into the boiler simultaneously with oxygen gas in the air, in the case of the oxygen combustion boiler, only oxygen from an exclusive oxygen generation apparatus is used as a combustion oxygen source of the boiler, so that in the boiler exhaust gas components, steam and carbon dioxide which are produced due to oxidation of hydrogen, carbon, and hydrocarbon which are the main components of the fuel are the main components and excessive nitrogen gas in the air is not included.

Thus, the exhaust gas is cooled and compressed, thereby moisture and carbon dioxide in the gas can be captured simultaneously. A large amount of moisture is included in the exhaust gas of the oxygen combustion boiler, though moisture generated by the conventional cooling and dehumidification equipment is not in a large amount, thus a large amount of moisture in the exhaust gas is discharged outside the system without being used effectively. If moisture obtained by cooling the exhaust gas can be captured in a large amount at a low cost, the captured moisture can be utilized as cycle water of the steam-water cycle of the steam turbine. However, in the conventional system, the amount of water captured is not sufficient for utilization as cycle water of the steam-water cycle of the steam turbine.

An object of the present invention is to provide a multipurpose thermal power plant system capable of capturing moisture and carbon dioxide in large quantities at a low cost from the exhaust gas of the oxygen combustion boiler.

The multipurpose thermal power plant system of the present invention, when using fossil fuel composed of carbon, hydrogen, a very small amount of sulfur, and nitrogen as fuel, includes an oxygen combustion boiler, a steam turbine, a generator, an oxygen separator for generating oxygen fed to the oxygen combustion boiler, a fuel feed apparatus for feeding fossil fuel composed of carbon, hydrogen, a very small amount of sulfur, and nitrogen to the oxygen combustion boiler, denitrification equipment for removing nitrogen oxide in the exhaust gas of the oxygen combustion boiler, a gas heat exchanger for performing heat exchange between boiler exhaust gas and recirculation boiler exhaust gas including oxygen, a condensate cooler for cooling exhaust gas at the exit of the gas heat exchanger with condensate of the steam turbine, a recirculation system for recirculating boiler exhaust gas at the exit of the condensate cooler to the oxygen combustion boiler, an oxygen injection system for feeding oxygen from the oxygen separator to the recirculation system, a dust collector for removing dust from exhaust gas at the exit of the condensate cooler, a desulfurizer for removing sulfur in the boiler exhaust gas from the dust collector, a cooling water-desalination apparatus for producing water by cooling boiler exhaust gas from the desulfurizer, a carbon dioxide liquefier for obtaining carbon dioxide by compressing boiler exhaust gas at the exit of the cooling water-desalination apparatus, a carbon dioxide storage tank for storing liquefied carbon dioxide obtained by the carbon dioxide liquefier, a fresh water tank for capturing water generated by the cooling water-desalination apparatus, and a water feed system for feeding water of the fresh water tank to the steam turbine system as steam cycle water of the steam turbine.

When using fossil fuel such as liquefied natural gas composed of carbon and hydrogen as fuel, the multipurpose thermal power plant system of the present invention includes an oxygen combustion boiler, a steam turbine, a generator, an oxygen separator for generating oxygen fed to the oxygen combustion boiler, a fuel feed apparatus for feeding fossil fuel such as liquefied natural gas composed of carbon and hydrogen to the oxygen combustion boiler, a gas heat exchanger for performing heat exchange between boiler exhaust gas and recirculation boiler exhaust gas including oxygen, a condensate cooler for cooling exhaust gas at the exit of the gas heat exchanger with condensate of the steam turbine, a recirculation system for recirculating boiler exhaust gas at the exit of the condensate cooler to the oxygen combustion boiler, an oxygen injection system for feeding oxygen from the oxygen separator to the recirculation system, a cooling water-desalination apparatus for producing water by cooling boiler exhaust gas from the condensate cooler, a carbon dioxide liquefier for obtaining carbon dioxide by compressing boiler exhaust gas at the exit of the cooling water-desalination apparatus, a carbon dioxide storage tank for storing liquefied carbon dioxide obtained by the carbon dioxide liquefier, a fresh water tank for capturing water generated by the cooling water-desalination apparatus, and a water feed system for feeding water of the fresh water tank to the steam turbine system as steam cycle water of the steam turbine.

When using hydrogen fuel as fuel, the multipurpose thermal power plant system of the present invention includes an oxygen combustion boiler, a steam turbine, a generator, an oxygen separator for generating oxygen fed to the oxygen combustion boiler, a fuel feed apparatus for feeding hydrogen fuel to the oxygen combustion boiler, a gas heat exchanger for performing heat exchange between boiler exhaust gas and recirculation boiler exhaust gas including oxygen, a condensate cooler for cooling exhaust gas at the exit of the gas heat exchanger with condensate of the steam turbine, a recirculation system for recirculating boiler exhaust gas at the exit of the condensate cooler to the oxygen combustion boiler, an oxygen injection system for feeding oxygen from the oxygen separator to the recirculation system, a cooling water-desalination apparatus for producing water by cooling boiler exhaust gas from the condensate cooler, a fresh water tank for capturing water generated by the cooling water-desalination apparatus, and a water feed system for feeding water of the fresh water tank to the steam turbine system as steam cycle water of the steam turbine.

When using fossil fuel composed of carbon as fuel, the multipurpose thermal power plant system includes an oxygen combustion boiler, a steam turbine, a generator, an oxygen separator for generating oxygen fed to the oxygen combustion boiler, a fuel feed apparatus for feeding fossil fuel composed of carbon to the oxygen combustion boiler, a gas heat exchanger for performing heat exchange between boiler exhaust gas and recirculation boiler exhaust gas including oxygen, a condensate cooler for cooling exhaust gas at the exit of the gas heat exchanger with condensate of the steam turbine, a recirculation system for recirculating boiler exhaust gas at the exit of the condensate cooler to the oxygen combustion boiler, an oxygen injection system for feeding oxygen from the oxygen separator to the recirculation system, a carbon dioxide liquefier for obtaining carbon dioxide by compressing boiler exhaust gas from the condensate cooler, and/or a carbon dioxide storage tank for storing liquefied carbon dioxide obtained by the carbon dioxide liquefier.

According to the present invention, in correspondence to the fuel kind burned by the boiler, from the fuel, not only electric energy but also water or carbon dioxide can be obtained simultaneously in large quantities at a low cost by a method friendly to the natural environment.

### BRIEF DESCRIPTION OF THE DRAWINGS

Fig. 1 is a block diagram of the multipurpose thermal power plant system of a first embodiment of the present invention using fuel like coal including carbon, hydrogen, ash, and moisture as main components of boiler fuel and a small amount of sulfur and nitrogen;
Fig. 2 is a block diagram of the multipurpose thermal power plant system of a second embodiment of the present invention using fuel like liquefied natural gas including carbon, hydrogen, and hydrocarbon as main components of boiler fuel but not including a small amount of sulfur and nitrogen;
Fig. 3 is a block diagram of the multipurpose thermal power plant system of a third embodiment of the present invention using hydrogen gas fuel including only hydrogen as a main component of boiler fuel but not including a small amount of sulfur and nitrogen; and
Fig. 4 is a block diagram of the multipurpose thermal power plant system of a fourth embodiment of the present invention using carbon fuel including only carbon as a main component of boiler fuel but not including a small amount of sulfur and nitrogen.

### DETAILED DESCRIPTION OF THE PREFERRED EMBODIMENTS

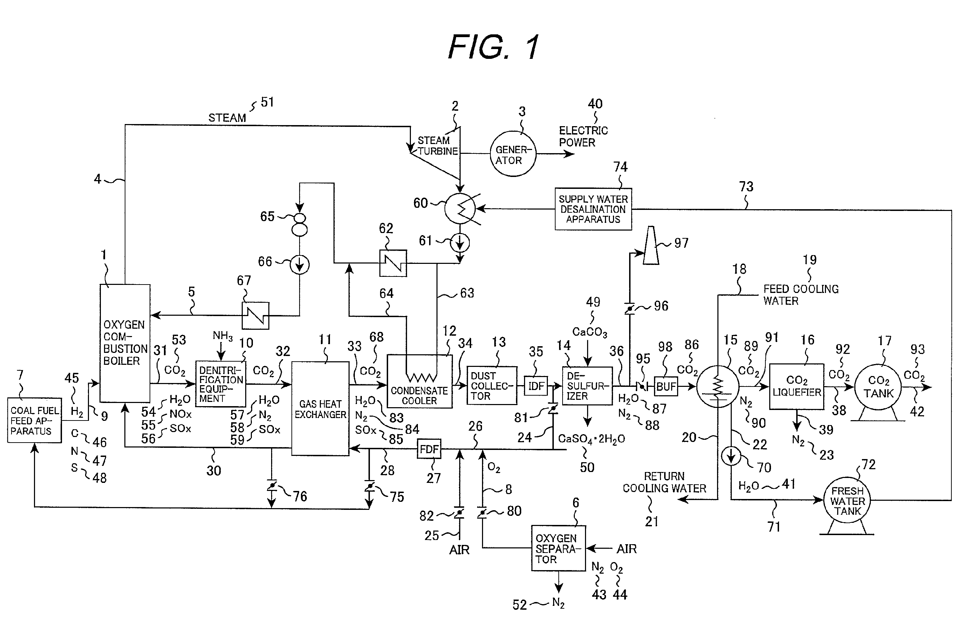

Hereinafter, by referring to the accompanying drawings, with respect to the multipurpose thermal power plant system using the oxygen combustion boiler, a plurality of embodiments of the present invention with the fuel of the oxygen combustion boiler changed will be explained. Figs. 1 to 4 show embodiments of the multipurpose thermal power plant system corresponding to four kinds of fuel. In all the drawings, the same components are given the same numerals.

### (Embodiment 1)

Fig. 1 shows a first embodiment of the present invention of the multipurpose thermal power plant system using fuel like coal composed of the main components of carbon, hydrogen, ash, and moisture as fuel of an oxygen combustion boiler 1 including a very small amount of sulfur and nitrogen. This embodiment is a multipurpose thermal power plant system for simultaneously capturing electric power, water, and carbon dioxide.

The multipurpose thermal power plant system of this embodiment includes the oxygen combustion boiler 1 for burning coal and generating steam, a steam turbine 2 driven so as to rotate by the steam generated by the oxygen combustion boiler 1, an oxygen combustion boiler steam pipe 4 for carrying steam 51 generated by the oxygen combustion boiler 1, a generator 3 for converting the turning force of the steam turbine 2 to electric power, a condensate pump 61 and a feed water pump 66 for feeding condensate obtained by condensing the steam for driving to rotate the steam turbine 2 to water by a condenser 60 to the oxygen combustion boiler 1, and a low-pressure feed water heater 62 and a high-pressure feed water heater 67 for heating the condensate by bleed steam from the steam turbine 2.

The condensate fed from the condensate pump 60 is partially branched, is fed to a condensate cooler 12 via a condensate feed pipe 63, and cools boiler exhaust gas discharged from a gas heat exchanger 11. The condensate temperature at the exit of the condenser 60 depends upon the vacuum level of the condenser, though assuming the vacuum level as 722 mmHg Vac, the saturation temperature is about 33.1°C and the condensate can cool boiler exhaust gas discharged from the gas heat exchanger 11. If the gas temperature at the exit of the condensate cooler 12 is lowered, the gas temperature of exhaust gas flowing into a cooling water-desalination apparatus 15 at the later stage is lowered. The condensate heated by the condensate cooler 12 flows into a deaerator 65 via a condensate return pipe 64. The heat captured by the condensate cooler 12 produces an efficiency improvement effect for the entire plant. Further, by the condensate cooler 12, the exhaust gas temperature at the exit of the gas heat exchanger 11 is lowered, thus the entrance device of a forced fan (FDF) 27 which will be described later is cooled to an allowable design temperature or lower.

The feed water discharged from the deaerator 65 is pressurized by the feed water pump 66, flows down through the high-pressure feed water heater 67, and is fed into the oxygen combustion boiler 1 as feed water from the boiler feed water pipe 5. This feed water is heated again to steam by the oxygen combustion boiler 1 and is fed to the steam turbine 2.

Into the oxygen combustion boiler 1, coal fuel is input from a coal fuel feed apparatus 7 via a fuel feed pipe 9. In the coal fuel, hydrogen 45, carbon 46, nitrogen 47, and sulfur 48 are included.

At the exit of an induction fan (IDF) 35, a part of the boiler exhaust gas is branched, and the branched boiler exhaust gas is permitted to flow down through a boiler exhaust gas recirculation duct 24 via a boiler exhaust gas recirculation damper 81 and recirculate to the oxygen combustion boiler 1. Namely, a boiler exhaust gas recirculation gas system for returning the exit gas of the induction fan (IDF) 35 to the entrance of the forced fan (FDF) 27 is installed and the boiler exhaust gas is recirculated to the oxygen combustion boiler 1. The residual boiler exhaust gas flows on the side of a desulfurizer 14.

Further, in the boiler exhaust gas recirculation duct 24, oxygen 44 in air from the oxygen separator 6 flows via an oxygen feed damper 80 at the exit of the oxygen separator and the oxygen feed pipe 8 and is mixed with boiler recirculation gas. Namely, the oxygen injection place from the oxygen separator 6 is connected to the entrance of the forced fan (FDF) 27, thus the oxygen can be mixed with boiler exhaust gas from the condensate cooler 12. In the oxygen separator 6, nitrogen 43 in the air is separated from oxygen 44 in the air.

A mixture of oxygen and boiler recirculation gas flows down through an entrance duct 26 of the forced fan (FDF) and is sucked into the forced fan (FDF) 27. The mixed gas including oxygen is pressurized by the forced fan (FDF) 27, passes through an exit duct 28 of the forced fan (FDF), and enters the gas heat exchanger 11 to be heated. The mixed gas raised in temperature by the gas heat exchanger 11 passes through an exit duct 30 of the gas heat exchanger and is input into the oxygen combustion boiler 1 to burn coal.

Oxygen is oxidized in the oxygen combustion boiler 1, so that the components in the exhaust gas of the oxygen combustion boiler 1 are mainly composed of carbon dioxide 53, steam 54, nitrogen oxide 55, and sulfur oxide 56. These boiler exhaust gas components flow into the denitrification equipment 10 via an exit exhaust gas duct 31 of the oxygen combustion boiler. In the denitrification equipment 10, according to the chemical reaction formulas (1) and (2) indicated below, the nitrogen oxide 55 in the exhaust gas of the oxygen combustion boiler is decomposed by the chemical reaction on ammonia, thus exit steam 57 of the denitrification equipment and exit nitrogen 58 of the denitrification equipment are produced.

4NO + 4NH₃ + O₂ → 4N₂ + 6H₂O ---- (1)

2NO₂ + 4NH₃ + O₂ → 3N₂ + 6H₂O ---- (2)

Exit boiler exhaust gas of the denitrification equipment 10 flows into the gas heat exchanger 11 via an exit duct 32 of the denitrification equipment.

Boiler exhaust gas discharged from an exit duct 33 of the gas heat exchanger and the condensate cooler 12 flows down through an entrance duct 34 of the dust collector. The boiler exhaust gas with dust removed by the dust collector (electric dust collector) 13 is induced and pressurized by the induction fan 35.

The sulfur oxide 56 in the exit exhaust gas of the oxygen combustion boiler becomes exit sulfur oxide 59 of the denitrification equipment without being particularly affected. Furthermore, it becomes exit sulfur oxide 85 of the gas heat exchanger, flows down through the condensate cooler 12, the dust collector 13, and an induction fan (IDF) 35, and enters the desulfurizer 14 to be desulfurized. Here, the exit sulfur oxide 85 of the gas heat exchanger causes a chemical reaction on calcium carbonate CaCO₃ 49 according to the following chemical reaction formula (3) and becomes calcium sulfate CaSO₄·2H₂O and carbon dioxide gas. The carbon dioxide gas becomes exit carbon dioxide 86 of the desulfurizer together with exit carbon dioxide 68 of the gas heat exchanger and is captured by capture 16 of the carbon dioxide liquefier that will be described later.

SO₂ + 2H₂O + CaCO₃ + 0.5O₂ → CaSO₄ · 2H₂O + CO₂ --- (3)

The boiler exhaust gas components flowing through a desulfurizer exit duct 36 at the exit of the desulfurizer 14 are composed of only carbon dioxide, steam, and nitrogen gas.

The boiler exhaust gas discharged from the desulfurizer 14 is pressurized by a pressurizing fan (BUF) 98 and is sent by the cooling water-desalination apparatus 15. Non-condensable gas in the cooling water-desalination apparatus 15 and steam are cooled simultaneously, thus the moisture in the gas is cooled to the steam saturation temperature or lower to be captured. To the cooling water-desalination apparatus 15, the cooling water 19 is fed through the cooling water feed pipe 18. The cooling water discharged from the cooling water-desalination apparatus 15 passes through a cooling water return pipe 20, becomes return cooling water 21, and comes out. The water separated by the cooling water-desalination apparatus 15 is pressurized by a desalinated water take-out pipe 22 and a desalinated water transfer pump 70 and is fed to a fresh water tank 72 to be stored. The stored fresh water passes through a feed water desalination apparatus 74 via an entrance pipe 73 of the feed water desalination apparatus and after removal of impurities in the fresh water, is fed to the condenser 60 as water to supplement blow water with water-steam cycle water of the steam turbine 2 or feed water for water-steam cycle water during continuous operation to be utilized.

In this embodiment, the exit gas temperature of the condensate cooler 12 is lowered, thus the gas temperature of exhaust gas flowing into the cooling water-desalination apparatus 15 at the later stage is lowered, so that without increasing the amount of cooling feed water to the cooling water-desalination apparatus 15 and lowering the water temperature, the moisture amount captured by the cooling water-desalination apparatus 15 can be increased to three or four times and it is a sufficient amount of water to supplement blow water with water-steam cycle water of the steam turbine 2 or feed water for water-steam cycle water during continuous operation.

To the coal fuel feed apparatus 7, from a low-temperature bypass damper 75 of the gas heat exchanger, boiler recirculation gas including low-temperature oxygen is fed. Furthermore, from an exit high-temperature damper 76 of the gas heat exchanger, boiler recirculation gas including high-temperature oxygen is fed to the coal fuel feed apparatus 7. This gas including coal passes through the fuel feed pipe 9 and is input to the oxygen combustion boiler 1, thus coal combustion is executed.

High-purity nitrogen gas 52 discharged from the oxygen separator and exit nitrogen gas 23 of the carbon oxide liquefier are returned into the original air.

At the time of start, the oxygen combustion boiler 1 is air-burned using starting fuel. To start the oxygen combustion boiler 1, via an air intake duct 25 and an air intake damper 82, air is permitted to flow into the forced fan (FDF) 27 through the entrance duct 26 of the forced fan (FDF). This air is pressurized by the forced fan (FDF) 27, then passes through the exit duct 28 of the forced fan (FDF), and enters the gas heat exchanger 11. By the gas heat exchanger 11, air is heated by boiler exhaust gas, flows down through the exit duct 30 of the gas heat exchanger, is conveyed to the oxygen combustion boiler 1 as combustion air, and burns the starting fuel (for example, gas oil, not drawn). The boiler exhaust gas discharged from the oxygen combustion boiler 1 passes through the denitrification equipment 10, the gas heat exchanger 11, the condensate cooler 12, and the dust collector 13, is sucked in and pressurized by the induction fan (IDF) 35. The pressurized boiler exhaust gas passes through the desulfurizer 14, flows down through the desulfurizer exit duct 36 and a chimney entrance damper 96, enters a chimney 97, and is discharged into the air.

After starting, if oxygen combustion is switched, by an operation of closing the chimney entrance damper 96 by opening an entrance damper 95 of the cooling water-desalination apparatus, the boiler exhaust gas is switched to the side of the cooling water-desalination apparatus. The boiler exhaust gas flows on the side of the cooling water-desalination apparatus entrance damper 95 and the moisture and carbon dioxide in the boiler exhaust gas are captured respectively by the cooling water-desalination apparatus 15 and the carbon dioxide liquefier 16 which are apparatuses on the downstream side. The captured moisture is stored once in the fresh water tank 72. Further, the captured carbon dioxide is stored once in a carbon dioxide storage tank 17.

As mentioned above, this embodiment, using the oxygen combustion boiler, oxygen separator, fuel feed apparatus, steam turbine, steam turbine generator, denitrification equipment, gas heat exchanger, condensate cooler for cooling gas heat exchanger exit gas by condensate at the exit of the condenser which is a part of turbine steam cycle water, dust collector, desulfurizer, cooling water-desalination apparatus, and carbon dioxide liquefier, utilizing the characteristic that the main components of exhaust gas of the oxygen combustion boiler after combustion are carbon dioxide gas and steam, cools and compresses the exhaust gas and captures simultaneously the moisture and carbon dioxide in the gas. Furthermore, this embodiment is equipped with a water feed system for utilizing the moisture captured from the boiler exhaust gas as cycle water of the steam-water cycle of the steam turbine. The steam from the oxygen combustion boiler is all used for power generation and feed of a large amount of steam required by the water desalination apparatus and carbon dioxide capture apparatus is never necessary.

According to this embodiment, in correspondence to the fuel kind burned by the boiler (coal in this embodiment), from the fuel, not only electric energy but also water and carbon dioxide can be obtained simultaneously in large quantities at a low cost by a method friendly to the natural environment. Namely, from the exhaust gas system of the oxygen combustion boiler, sulfur oxides, nitrogen oxides, dust, and carbon dioxide are never discharged into the atmosphere, so that steam, water, and carbon dioxide for power generation can be produced simultaneously. Furthermore, the captured water can be utilized as steam cycle water of the steam turbine. Further, the oxygen combustion boiler, to output the same output, compared with a conventional general air combustion boiler, does not need to suck in nitrogen gas in the air not contributing to combustion into the boiler furnace, and generation of a nitrogen oxide produced from nitrogen gas in the air is not caused, so that an environment improvement effect is obtained. Not only fresh water generated by water desalination can be reused as steam cycle water of the steam turbine but also with respect to excessive moisture, in a region lacking in water resources, practical use as industrial water and drinking water can be expected.

Further, in the patent document 1, the boiler exhaust gas recirculation fan system is used, so that a recirculation fan for recirculating the boiler exhaust gas is necessary and an increase in the cost of equipment and an increase in the fan power are caused. In this embodiment, the induction fan (IDF) 35 and the forced fan (FDF) 27 are used for recirculation, so that compared with the case of use of the recirculation fan, an effect of reducing the cost of equipment and power is obtained.

Further, in the embodiment aforementioned, the exhaust gas discharged from the desulfurizer 14 is pressurized by the pressurizing fan (BUF) 98 and is sent to the cooling water-desalination apparatus 15, though the necessary total head of the boiler exhaust gas fed to the cooling water-desalination apparatus 15 is permitted to impose a burden on the head of the induction fan, thus the pressurizing fan can be omitted.

### (Embodiment 2)

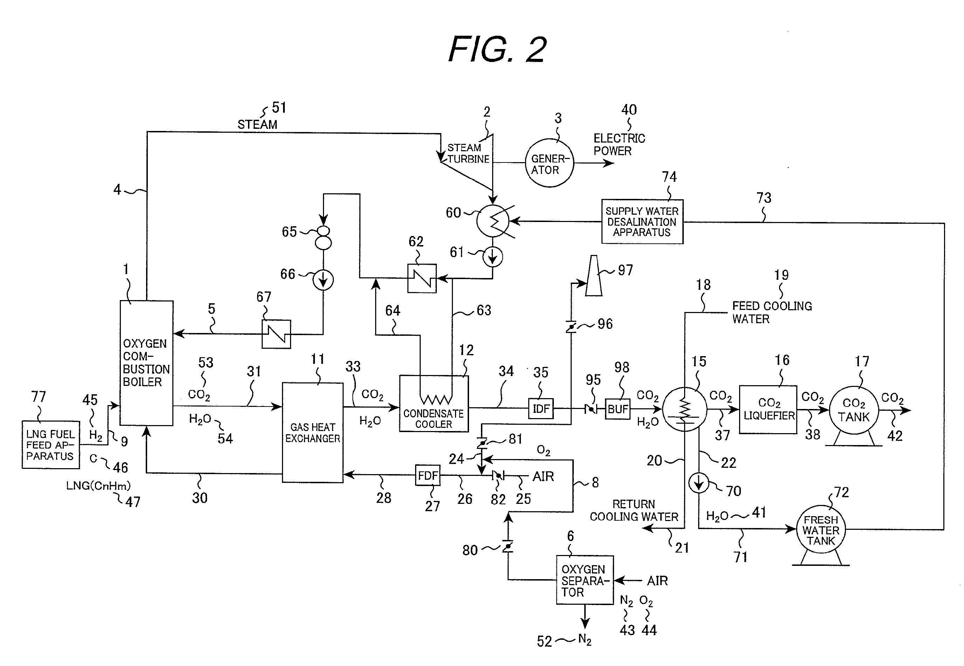

Fig. 2 shows a second embodiment of the present invention of the multipurpose thermal power plant system using fuel like liquefied natural gas (LNG) composed of the main components of carbon and hydrogen free of a very small amount of sulfur and nitrogen as fuel of the oxygen combustion boiler 1. This embodiment is also a multipurpose thermal power plant system for simultaneously capturing electric power, water, and carbon dioxide. For the same portions as those shown in Fig. 1, the explanation will be omitted.

In this embodiment, the oxygen combustion boiler 1 burns LNG fed from a liquefied natural gas (LNG) fuel feed apparatus 77 and generate steam. Therefore, the oxygen combustion boiler 1 has a system constitution that from the embodiment shown in Fig. 1, the denitrification equipment, duct collector, and desulfurizer are removed.

To the oxygen combustion boiler 1, from the liquefied natural gas (LNG) fuel feed apparatus 77, LNG fuel composed of hydrogen 45 and carbon 46 is input. Further, to the oxygen combustion boiler 1, mixed gas of the oxygen raised in temperature by the gas heat exchanger 11 and boiler recirculation gas is input and the mixed gas burns the LNG fuel. LNG is oxidized in the oxygen combustion boiler 1, thus the exhaust gas components of the oxygen combustion boiler 1 are composed of mainly carbon dioxide 53 and hydrogen 54 in the exhaust gas of the oxygen combustion boiler.

The boiler exhaust gas passes through the exit exhaust gas duct 31 of the oxygen combustion boiler and flows down into the gas heat exchanger 11. The boiler exhaust gas is fed to the condensate cooler 12 via the exit duct 33 of the exhaust gas heat exchanger and is cooled by a condensate. If the exit gas temperature of the condensate cooler 12 is lowered, the gas temperature to the cooling water-desalination apparatus 15 at the later stage is lowered and a cooling effect is produced. Further, the condensate heated by the condensate cooler 12 passes through the condensate return pipe 64 and flows into the deaerator 65. The captured heat produces an efficiency improvement effect for the entire plant.

The boiler exhaust gas discharged from the condensate cooler 12 enters the induction fan (IDF) 35. The boiler exhaust gas is induced and pressurized by the induction fan (IDF) 35, and then is fed to the cooling water-desalination apparatus 15. The boiler exhaust gas is cooled by the cooling water-desalination apparatus 15, thus the moisture in the gas is cooled to the steam saturation temperature or lower and is captured.

At the time of starting, similarly to Embodiment 1, the oxygen combustion boiler 1 is air-burned using starting fuel (for example, gas oil). The air-burned boiler exhaust gas passes through the gas heat exchanger 11 and the condensate cooler 12 and is sucked in and pressurized by the induction fan (IDF) 35. The pressurized boiler exhaust gas flows down through the chimney entrance damper 96, enters the chimney 97, and is discharged into the air. After starting, if oxygen combustion is switched, by an operation of closing the chimney entrance damper 96 by opening the entrance damper 95 of the cooling water-desalination apparatus, the boiler exhaust gas is switched to the side of the cooling water-desalination apparatus.

The moisture and carbon dioxide in the boiler exhaust gas are captured respectively by the cooling water-desalination apparatus 15 and the carbon dioxide liquefier 16 which are apparatuses on the downstream side. The captured moisture is stored once in the fresh water tank 72. Further, the captured carbon dioxide is stored once in the carbon dioxide storage tank 17. High-purity exit nitrogen gas of the carbon oxide liquefier is returned into the original air.

According to this embodiment, similarly to Embodiment 1, in correspondence to the fuel kind burned by the boiler (liquefied natural gas (LNG) in this embodiment), from the fuel, not only electric energy but also water and carbon dioxide can be obtained simultaneously in large quantities at a low cost by a method friendly to the natural environment.

Also in this embodiment, the induction fan (IDF) 35 and the forced fan (FDF) 27 are used for recirculation, so that compared with the case of use of the recirculation fan, an effect of reducing the cost of equipment and power is obtained.

Further, as fuel of this embodiment, liquefied natural gas (LNG) is used, so that the pressure in the furnace of the oxygen combustion boiler generally using a negative pressure design can be changed to a positive pressure design and in this case, the head of the induction fan is permitted to impose a burden on the head of the forced fan (FDF) 27, thus the induction fan (IDF) 35 can be omitted and it is effective in reducing the cost of equipment.

Further, similarly to Embodiment 1, the necessary total head of the boiler exhaust gas fed to the cooling water-desalination apparatus 15 is permitted to impose a burden on the head of the induction fan, thus the pressurizing fan can be omitted.

### (Embodiment 3)

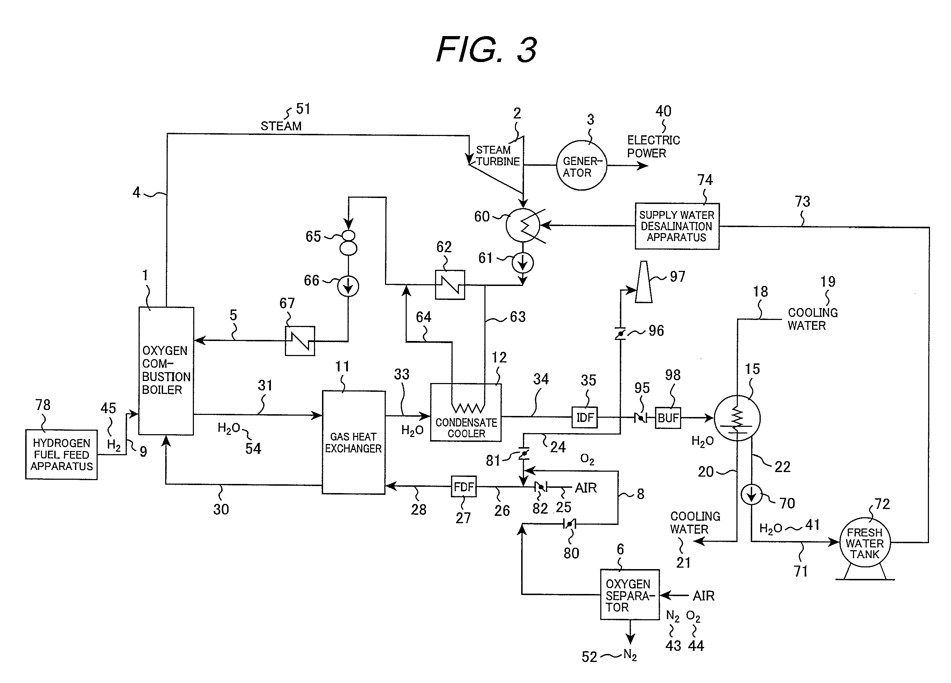

Fig. 3 shows a third embodiment of the present invention of the multipurpose thermal power plant system using fuel like hydrogen gas composed of hydrogen free of a very small amount of sulfur and nitrogen as fuel of the oxygen combustion boiler 1. This embodiment is a multipurpose thermal power plant system for simultaneously capturing electric power and water. For the same portions as those shown in Fig. 1, the explanation will be omitted.

In this embodiment, the oxygen combustion boiler 1 burns hydrogen fed from a hydrogen fuel feed apparatus 78 and generates steam. Therefore, the oxygen combustion boiler 1 has a system constitution that from the embodiment shown in Fig. 1, the denitrification equipment, duct collector, desulfurizer, and carbon dioxide liquefier are removed.

To the oxygen combustion boiler 1, from the hydrogen gas fuel feed apparatus 78, hydrogen 45 for fuel is input from the fuel feed pipe 9. Further, to the oxygen combustion boiler 1, mixed gas of the oxygen raised in temperature by the gas heat exchanger 11 and boiler recirculation gas is input and the mixed gas burns the hydrogen. Hydrogen is oxidized in the oxygen combustion boiler 1, thus the exhaust gas components of the oxygen combustion boiler 1 are composed of mainly steam 54.

The boiler exhaust gas passes through the exit exhaust gas duct 31 of the oxygen combustion boiler and flows down into the gas heat exchanger 11. The boiler exhaust gas is fed to the condensate cooler 12 via the exit duct 33 of the exhaust gas heat exchanger and is cooled by a condensate. If the exit gas temperature of the condensate cooler 12 is lowered, the gas temperature to the cooling water-desalination apparatus 15 at the later stage is lowered. Further, the condensate heated by the condensate cooler 12 passes through the condensate return pipe 64 and flows into the deaerator 65. The captured heat produces an efficiency improvement effect for the entire plant.

The boiler exhaust gas discharged from the condensate cooler 12 enters the induction fan (IDF) 35. The boiler exhaust gas is induced and pressurized by the induction fan (IDF) 35, and then is fed to the cooling water-desalination apparatus 15. The boiler exhaust gas is cooled by the cooling water-desalination apparatus 15, thus the moisture in the gas is cooled to the steam saturation temperature or lower and is captured.

At the time of starting, similarly to Embodiment 1, the oxygen combustion boiler 1 is air-burned using starting fuel (for example, gas oil). The air-burned boiler exhaust gas passes through the gas heat exchanger 11 and the condensate cooler 12 and is sucked in and pressurized by the induction fan (IDF) 35. The pressurized boiler exhaust gas flows down through the chimney entrance damper 96, enters the chimney 97, and is discharged into the air. After starting, if oxygen combustion is switched, by an operation of closing the chimney entrance damper 96 by opening the entrance damper 95 of the cooling water-desalination apparatus, the boiler exhaust gas is switched to the side of the cooling water-desalination apparatus.

The moisture in the boiler exhaust gas is captured by the cooling water-desalination apparatus 15. The captured moisture is stored once in the fresh water tank 72.

According to this embodiment, similarly to the other embodiments, in correspondence to the fuel kind burned by the boiler (hydrogen gas in this embodiment), from the fuel, not only electric energy but also water can be obtained simultaneously in large quantities at a low cost by a method friendly to the natural environment.

Further, as fuel of this embodiment, hydrogen gas is used, so that the pressure in the furnace of the oxygen combustion boiler generally using a negative pressure design can be changed to a positive pressure design and in this case, the head of the induction fan is permitted to impose a burden on the head of the forced fan (FDF) 27, thus the induction fan (IDF) 35 can be omitted and it is effective in reducing the cost of equipment.

Further, similarly to Embodiment 1, the necessary total head of the boiler exhaust gas fed to the cooling water-desalination apparatus is permitted to impose a burden on the head of the induction fan, thus the pressurizing fan can be omitted.

### (Embodiment 4)

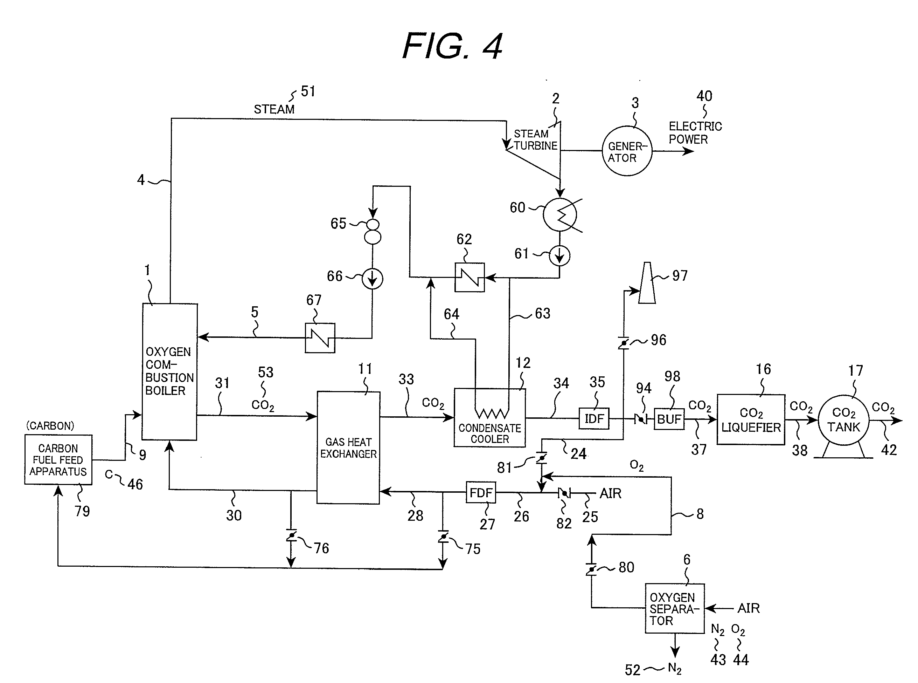

Fig. 4 shows a fourth embodiment of the present invention of the multipurpose thermal power plant system using fuel like carbon (char) composed of carbon free of a very small amount of sulfur and nitrogen as fuel of the oxygen combustion boiler 1. This embodiment is a multipurpose thermal power plant system for simultaneously obtaining steam and carbon dioxide. For the same portions as those shown in Fig. 1, the explanation will be omitted.

This embodiment burns carbon fed from a carbon fuel feed apparatus 79 and generates steam. Therefore, this embodiment has a system constitution that from the embodiment shown in Fig. 1, the denitrification equipment, duct collector, desulfurizer, and cooling water-desalination apparatus are removed.

To the oxygen combustion boiler 1, from the carbon fuel feed apparatus 79, carbon 46 for fuel is input via the fuel feed pipe 9. Further, to the oxygen combustion boiler 1, mixed gas of the oxygen raised in temperature by the gas heat exchanger 11 and boiler recirculation gas is input and the mixed gas burns the carbon. Carbon is oxidized in the oxygen combustion boiler 1, thus the exhaust gas component of the oxygen combustion boiler 1 is carbon dioxide 53 in the exit exhaust gas of the oxygen combustion boiler.

The boiler exhaust gas passes through the exit exhaust gas duct 31 of the oxygen combustion boiler and flows down into the gas heat exchanger 11. The boiler exhaust gas is fed to the condensate cooler 12 via the exit duct 33 of the exhaust gas heat exchanger and is cooled by a condensate. If the exit gas temperature of the condensate cooler 12 is lowered, the gas temperature to the carbon dioxide liquefier 16 at the later stage is lowered and an effect of improving the efficiency of liquefying carbon dioxide is produced. The condensate heated by the condensate cooler 12 passes through the condensate return pipe 64 and flows into the deaerator 65. The captured heat produces an efficiency improvement effect for the entire plant.

The boiler exhaust gas discharged from the condensate cooler 12 enters the induction fan (IDF) 35. The boiler exhaust gas is induced and pressurized by the induction fan (IDF) 35 and then is fed to the carbon dioxide liquefier 16. The boiler exhaust gas (carbon dioxide gas) is compressed and cooled by the carbon dioxide liquefier 16, and is thereby liquefied.

At the time of starting, similarly to Embodiment 1, the oxygen combustion boiler 1 is air-burned using starting fuel (for example, gas oil). The air-burned boiler exhaust gas passes through the gas heat exchanger 11 and the condensate cooler 12 and is sucked in and pressurized by the induction fan (IDF) 35. The pressurized boiler exhaust gas flows down through the chimney entrance damper 96, enters the chimney 97, and is discharged into the air. After starting, if oxygen combustion is switched, by an operation of closing the chimney entrance damper 96 by opening the entrance damper 94 of the carbon dioxide liquefier, the boiler exhaust gas is switched to the side of the carbon dioxide liquefier.

Carbon dioxide in the boiler exhaust gas is captured by the carbon dioxide liquefier 16 that is an apparatus on the downstream side. The captured carbon dioxide is stored once in the carbon dioxide storage tank 17.

According to this embodiment, similarly to the other embodiments, in correspondence to the fuel kind burned by the boiler (carbon (char) in this embodiment), from the fuel, not only electric energy but also carbon dioxide can be obtained simultaneously in large quantities at a low cost by a method friendly to the natural environment.

Further, as fuel of this embodiment, carbon (char) is used, so that the pressure in the furnace of the oxygen combustion boiler generally using a negative pressure design can be changed to a positive pressure design and in this case, the head of the induction fan is permitted to impose a burden on the head of the forced fan (FDF) 27, thus the induction fan (IDF) 35 can be omitted and it is effective in reducing the cost of equipment.

Further, similarly to Embodiment 1, the necessary total head of the boiler exhaust gas fed to the cooling water-desalination apparatus 15 is permitted to impose a burden on the head of the induction fan, thus the pressurizing fan can be omitted.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A multipurpose thermal power plant system comprising
- an oxygen combustion boiler (1),
- a steam turbine (2) driven by steam generated by the oxygen combustion boiler (1),
- a generator (3) driven by the steam turbine (2),
- an oxygen separator (6) for generating oxygen fed to the oxygen combustion boiler (1),
- a fuel feed apparatus for feeding fuel to the oxygen combustion boiler (1),
- a gas heat exchanger (11) for performing heat exchange between the boiler exhaust gas and recirculation boiler exhaust gas including oxygen,
- a condensate cooler (12) for cooling exhaust gas at an exit of the gas heat exchanger (11) with a condensate of the steam turbine (12),
- a recirculation system for recirculating boiler exhaust gas at an exit of the condensate cooler (12) to the oxygen combustion boiler (1), and
- an oxygen injection system for feeding oxygen from the oxygen separator to the recirculation system,
**characterized in that**,
the multiple thermal power plant system further comprising
- a cooling water-desalination apparatus (15) for producing water by cooling boiler exhaust gas from the condensate cooler (12),
- a fresh water tank (72) for capturing water generated by the cooling water-desalination apparatus (15), and
- a water feed system for feeding water of the fresh water tank (72) to the steam turbine system as steam cycle water of the steam turbine (2).

2. A multipurpose thermal power plant system according to claim 1, further comprising
- a carbon dioxide liquefier (16) for obtaining carbon dioxide by compressing boiler exhaust gas from the condensate cooler (12), and
- a carbon dioxide storage tank (17) for storing liquefied carbon dioxide obtained by the carbon dioxide liquefier (16), wherein
- the fuel is fossil fuel composed of carbon.

3. A multipurpose thermal power plant system according to claim 1, wherein
- the fuel is hydrogen fuel.

4. A multipurpose thermal power plant system according to claim 1, further comprising
- a carbon dioxide liquefier (16) for obtaining carbon dioxide by compressing boiler exhaust gas at an exit of the cooling water-desalination apparatus (15),
- a carbon dioxide storage tank (17) for storing liquefied carbon dioxide obtained by the carbon dioxide liquefier (16), wherein
- the fuel is fossil fuel like liquefied natural gas composed of carbon and hydrogen.

5. A multipurpose thermal power plant system according to claim 1, further comprising
- a denitrification equipment (10) for removing nitrogen oxides in the exhaust gas of the oxygen combustion boiler (1),
- dust collector (13) for removing dust from the exhaust gas at the exit of the condensate cooler (12),
- a desulfurizer (14) for removing sulfur in boiler exhaust gas from the dust collector (13), wherein
- the cooling water-desalination apparatus (15) is adapted for producing water by cooling the boiler exhaust gas from the desulfurizer (14),
- a carbon dioxide liquefier (16) for obtaining carbon dioxide by compressing boiler exhaust gas at an exit of the cooling water-desalination apparatus (15), and
- a carbon dioxide storage tank (17) for storing liquefied carbon dioxide obtained by the carbon dioxide liquefier (16), wherein
- the fuel is fossil fuel composed of carbon, hydrogen, a small amount of sulfur, and nitrogen.

## Patentansprüche

1. Mehrzweckwärmekraftwerksystem, das Folgendes umfasst
- einen Sauerstoffverbrennungskessel (1),
- eine Dampfturbine (2), die von dem Dampf angetrieben wird, der durch den Sauerstoffverbrennungskessel (1) erzeugt wird,
- einen Generator (3), der durch die Dampfturbine (2) angetrieben wird,
- einen Sauerstoffabscheider (6) zum Erzeugen des Sauerstoffs, der dem Sauerstoffverbrennungskessel (1) zugeführt wird,
- eine Brennstoffzuführvorrichtung zum Zuführen des Brennstoffs zu dem Sauerstoffverbrennungskessel (1),
- einen Gaswärmetauscher (11) zum Durchführen eines Wärmeaustauschs zwischen dem Kesselabgas und dem Rückführungskesselabgas, das den Sauerstoff enthält,
- einen Kondensatkühler (12) zum Kühlen des Abgases an einer Austrittsöffnung des Gaswärmetauschers (11) mit einem Kondensat der Dampfturbine (12),
- ein Rückführungssystem zum Rückführen des Kesselabgases an einer Austrittsöffnung des Kondensatkühlers (12) zu dem Sauerstoffverbrennungskessel (1), und
- ein Sauerstoffinjizierungssystem zum Zuführen des Sauerstoffs aus dem Sauerstoffabscheider in das Rückführungssystem,
**dadurch gekennzeichnet, dass**
das Mehrfachwärmekraftwerksystem ferner Folgendes umfasst
- eine Kühlungswasserentsalzungsvorrichtung (15) zum Erzeugen von Wasser durch Kühlen des Kesselabgases aus dem Kondensatkühler (12),
- einen Süßwassertank (72) zum Auffangen des Wassers, das durch die Kühlungswasserentsalzungsvorrichtung (15) erzeugt wird, und
- ein Wasserzuführungssystem zum Zuführen des Wassers aus dem Süßwassertank (72) in das Dampfturbinensystem als das Dampfkreislaufwasser der Dampfturbine (2).

2. Mehrzweckwärmekraftwerksystem nach Anspruch 1, das ferner Folgendes umfasst
- einen Kohlendioxidverflüssiger (16) zum Gewinnen von Kohlendioxid durch Komprimieren des Kesselabgases von dem Kondensatkühler (12), und
- einen Kohlendioxidspeichertank (17) zum Speichern des verflüssigten Kohlendioxids, das durch den Kohlendioxidverflüssiger (16) gewonnen wurde, wobei
- der Brennstoff ein fossiler Brennstoff ist, der aus Kohle besteht.

3. Mehrzweckwärmekraftwerksystem nach Anspruch 1, wobei der Brennstoff ein Wasserstoffbrennstoff ist.

4. Mehrzweckwärmekraftwerksystem nach Anspruch 1, das ferner Folgendes umfasst
- einen Kohlendioxidverflüssiger (16) zum Gewinnen von Kohlendioxid durch Komprimieren des Kesselabgases an einer Austrittsöffnung der Kühlungswasserentsalzungsvorrichtung (15),
- einen Kohlendioxidspeichertank (17) zum Speichern des verflüssigten Kohlendioxids, das durch den Kohlendioxidverflüssiger (16) gewonnen wurde, wobei
- der Brennstoff ein fossiler Brennstoff ist, wie etwa ein verflüssigtes, natürliches Gas, das aus Kohlenstoff und Wasserstoff besteht.

5. Mehrzweckwärmekraftwerksystem nach Anspruch 1, das ferner Folgendes umfasst
- eine Denitrifizierungsausrüstung (10) zum Entfernen von Stickoxiden in dem Abgas des Sauerstoffverbrennungskessels (1),
- eine Staubauffangvorrichtung (13) zum Entfernen von Staub aus dem Abgas an der Austrittsöffnung des Kondensatkühlers (12),
- eine Entschwefelungsvorrichtung (14) zum Entfernen von Schwefel in dem Kesselabgas der Staubauffangvorrichtung (13), wobei
- die Kühlungswasserentsalzungsvorrichtung (15) zum Erzeugen von Wasser durch Kühlen des Kesselabgases von der Entschwefelungsvorrichtung (14) ausgelegt ist,
- einen Kohlendioxidverflüssiger (16) zum Gewinnen von Kohlendioxid durch Komprimieren des Kesselabgases an einer Austrittsöffnung der Kühlungswasserentsalzungsvorrichtung (15), und
- einen Kohlendioxidspeichertank (17) zum Speichern des verflüssigten Kohlendioxids, das durch den Kohlendioxidverflüssiger (16) gewonnen wurde, wobei
- der Brennstoff ein fossiler Brennstoff ist, der aus Kohlenstoff, aus Wasserstoff, aus einer kleinen Menge Schwefel und aus Stickstoff besteht.

## Revendications

1. Système formant centrale thermique multifonctions comprenant
- une chaudière à combustion d'oxygène (1),
- une turbine à vapeur (2) entraînée par la vapeur générée par la chaudière à combustion d'oxygène (1),
- un générateur (3) entraîné par la turbine à vapeur (2),
- un séparateur d'oxygène (6) pour générer de l'oxygène alimenté à la chaudière à combustion d'oxygène (1),
un appareil d'alimentation de carburant pour alimenter un carburant à la chaudière à combustion d'oxygène (1),
- un échangeur de chaleur à gaz (11) pour effectuer un échange de chaleur entre les gaz d'échappement de la chaudière et des gaz d'échappement recyclés de la chaudière incluant de l'oxygène,
- un refroidisseur à condensats (12) pour refroidir les gaz d'échappement à une sortie de l'échangeur de chaleur à gaz (11) avec un condensat de la turbine à vapeur (12),
- un système de recyclage pour recycler des gaz d'échappement de la chaudière à une sortie du refroidisseur à condensats (12) vers la chaudière à combustion d'oxygène (1), et
- un système d'injection d'oxygène pour alimenter de l'oxygène depuis le séparateur d'oxygène vers le système de recyclage,
**caractérisé en ce que**
le système formant centrale thermique multifonctions comprend en outre
- un appareil de dessalement d'eau de refroidissement (15) pour produire de l'eau par refroidissement des gaz d'échappement de la chaudière depuis le refroidisseur à condensats (12),
- un réservoir d'eau fraîche (72) pour capturer l'eau générée par l'appareil de dessalement d'eau de refroidissement (15), et
- un système d'alimentation d'eau pour alimenter de l'eau du réservoir d'eau fraîche (72) au système formant turbine à vapeur à titre d'eau du cycle à vapeur de la turbine à vapeur (2).

2. Système formant centrale thermique multifonctions selon la revendication 1, comprenant en outre
- un dispositif de liquéfaction de dioxyde de carbone (16) pour obtenir du dioxyde de carbone en comprimant les gaz d'échappement de la chaudière depuis le refroidisseur à condensats (12), et
- réservoir de stockage de dioxyde de carbone (17) pour stocker du dioxyde de carbone liquéfié obtenu par le dispositif de liquéfaction de dioxyde de carbone (16), dans lequel
- le carburant est un carburant fossile composé de carbone.

3. Système formant centrale thermique multifonctions selon la revendication 1, dans lequel
- le carburant est de l'hydrogène.

4. Système formant centrale thermique multifonctions selon la revendication 1, comprenant en outre
- un dispositif de liquéfaction de dioxyde de carbone (16) pour obtenir du dioxyde de carbone en comprimant les gaz d'échappement de la chaudière à une sortie de l'appareil de dessalement d'eau de refroidissement (15),
- un réservoir de stockage de dioxyde de carbone (17) pour stocker du dioxyde de carbone liquéfié obtenu par le dispositif de liquéfaction de dioxyde de carbone (16),
dans lequel
- le combustible est un combustible fossile semblable à un gaz naturel liquéfié composé de carbone et d'hydrogène.

5. Système formant centrale thermique multifonctions selon la revendication 1, comprenant en outre
- un équipement de dénitrification (10) pour supprimer les oxydes d'azote dans les gaz d'échappement de la chaudière à combustion d'oxygène (1),
- un collecteur de poussière (13) pour supprimer les poussières hors des gaz d'échappement à la sortie du refroidisseur à condensats (12),
- un appareil de désulfuration (14) pour supprimer le soufre dans les gaz d'échappement de la chaudière depuis le collecteur de poussière (13), dans lequel
- l'appareil de dessalement d'eau de refroidissement (15) est adapté à produire de l'eau par refroidissement des gaz d'échappement de la chaudière depuis l'appareil de désulfuration (14),
- un dispositif de liquéfaction de dioxyde de carbone (16) pour obtenir du dioxyde de carbone en comprimant les gaz d'échappement de la chaudière à une sortie de l'appareil de dessalement d'eau de refroidissement (15), et
- un réservoir de stockage de dioxyde de carbone (17) pour stocker le dioxyde de carbone liquéfié obtenu par le dispositif de liquéfaction de dioxyde de carbone (16), dans lequel
- le combustible est un combustible fossile composé de carbone, d'hydrogène, d'une petite quantité de soufre, et d'azote.
